# EUROPEAN PATENT SPECIFICATION

(11) **EP 3 240 122 B1**
(45) Date of publication and mention of the grant of the patent: **10.04.2019**
(21) Application number: 17166297.6
(22) Date of filing: 12.04.2017
(51) Int. Cl.: H01R 13/74, H01R 13/625, H02K 5/22

(54) **ELECTRICAL CONNECTION ASSEMBLY FOR AN ELECTRONIC CIRCULATOR**
ELEKTRISCHE VERBINDUNGSANORDNUNG FÜR EINEN ELEKTRONISCHEN ZIRKULATOR
ENSEMBLE DE CONNEXION ÉLECTRIQUE POUR UN CIRCULATEUR ÉLECTRONIQUE

(30) Priority: 28.04.2016 IT UA20162980
(43) Date of publication of application: 01.11.2017
(73) Proprietor: TACO ITALIA S.r.l., 36066 Sandrigo (VI) (IT)
(72) Inventor: BEDIN, Dario, 36033 Marostica (VI) (IT)
(74) Representative: Botti, Mario

(56) References cited:
- EP-A1- 2 151 897
- US-B1- 6 800 808

## Description

### Field of application

The present invention relates, according to its more general aspect, to an electrical connection assembly for electronic circulators applied to boilers or to heating plants.

The invention therefore relates to the technological sector of circulation pumps for heating or cooling plants.

### Prior art

Centrifugal electric pumps, generally known as "circulators", are widely used for circulation of the carrier fluid in heating plants.

As is known in the sector, the circulator must be suitably connected electrically to the boiler or the plant; therefore it is generally provided with a power connector and a signal connector, respectively.

With the ever increasing need to reduce the dimensions of boilers or plants all the components of the circulator have over the years undergone increasing greater optimization aimed mainly at reduced the dimensions of the components.

Similarly the connection assembly has undergone modifications regarding in particular the use of standard connectors usually of the Mate-N Lock type, also known as AMP connectors, derived from the name of the company which first introduced them.

An increasingly more frequent requirement is that of being able to have circulators with connectors which can be easily accessed and which are not obstructed by other components situated in their vicinity so as to facilitate the connection which in extreme cases could be very difficult and require a lot of time during installation of the circulator. This in order to ensure the greatest possible flexibility for the boilers or the heating plants on which the circulators must be mounted.

In order to satisfy this requirement it would be desirable to be able to personalize the orientation of the connectors, but this would result in a consequent increase in the production costs. EP2151897 describes a connector assembly according to the preamble of claim 1.

The technical problem forming the basis of the present invention is, therefore, that of devising an electrical connection assembly for a circulator which solves the aforementioned problem, overcoming at the same time the limitations of the prior art, and in particular allows the electrical connectors to be arranged such that that they can be oriented in different ways both relative to each other and relative to the main axis of the circulator. In this way the end user would be able to choose how to arrange the connectors, being able to satisfy any external constraints due to the particular location of the circulator in the boiler or the plant, with a simple and rational constructional solution.

The object of the present invention is to satisfy the aforementioned requirement and at the same time overcome the drawbacks mentioned with reference to the prior art.

### Summary of the invention

This object is achieved by an electrical connection assembly for a circulator, in accordance with claim 1 of the present invention.

The dependent claims describe preferred and particularly advantageous embodiments of the connection assembly according to the invention.

Further characteristic features and advantages will appear more clearly from the detailed description given herein below of a preferred, but not exclusive, embodiment of the present invention, with reference to the attached figures, provided by way of a non-limiting example.

### Brief description of the drawings

Figure 1 shows a perspective view of a circulator in its entirety comprising an electrical connection assembly in accordance with the present invention;
Figure 2 shows the overall arrangement of Figure 1 with a connector lid shown in an open position;
Figure 3 shows an exploded perspective view of the circulator according to Figure 1;

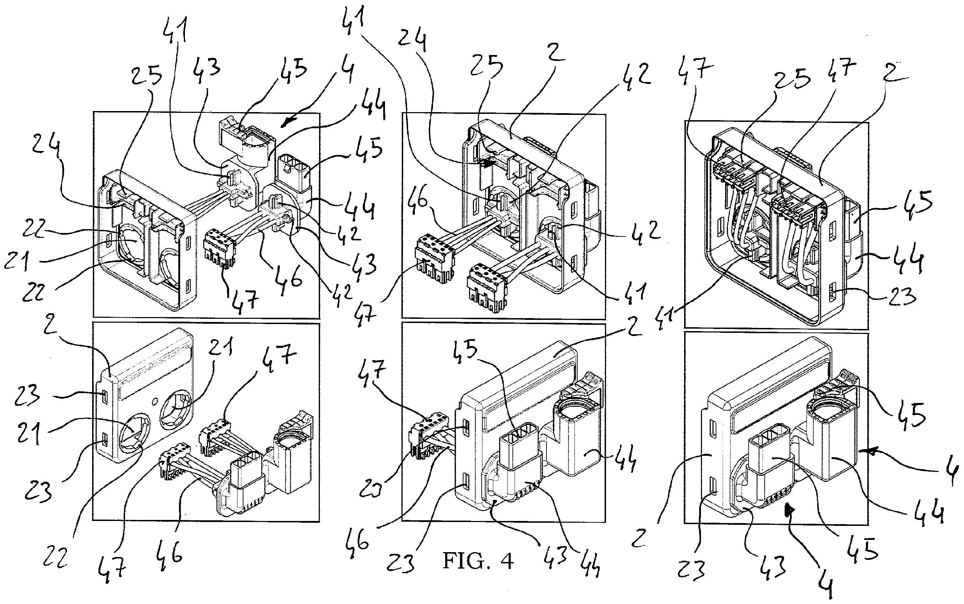

Figure 4 shows figures illustrating the stages of assembly of the connectors on the lid;

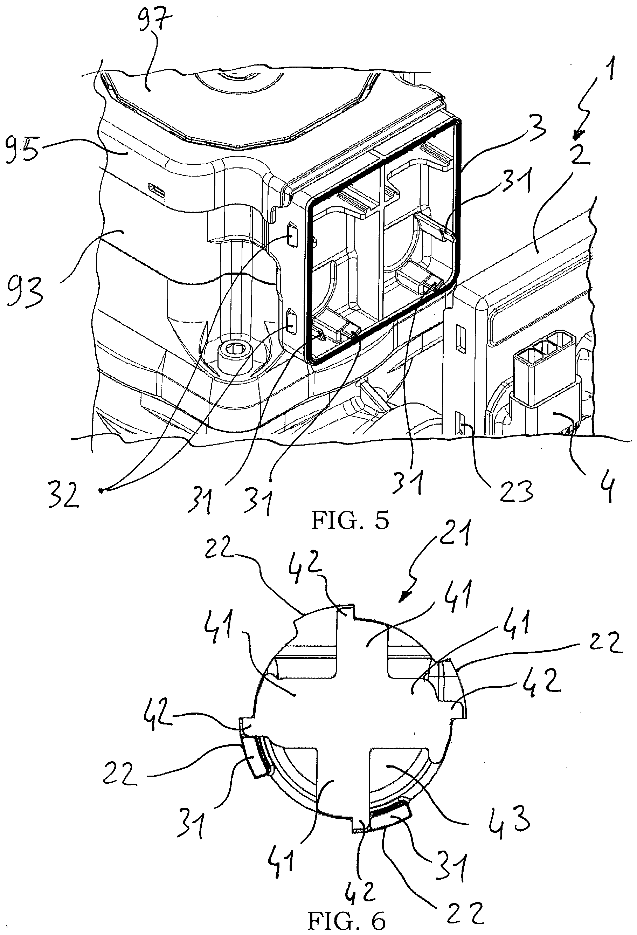

Figure 5 shows a detail of Figure 2;
Figure 6 shows a schematic view of the connection between connector and lid;

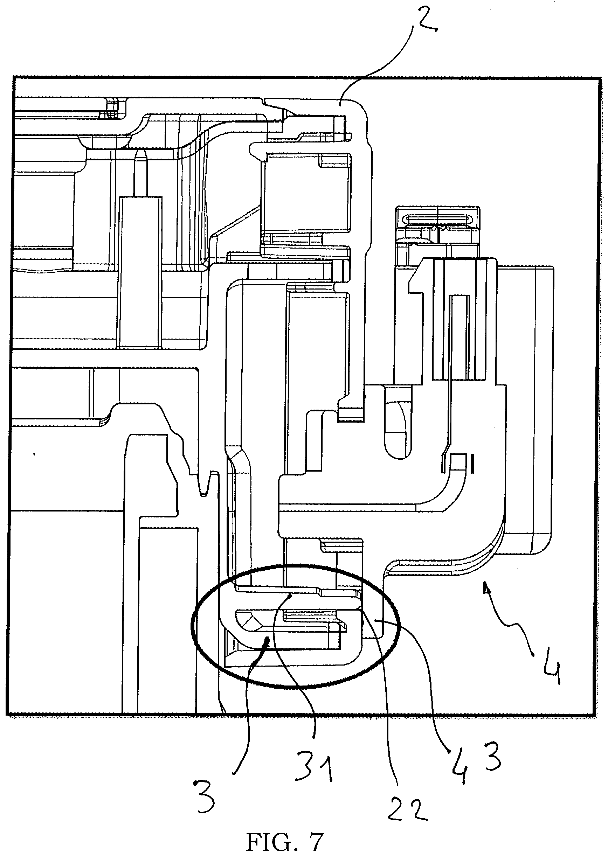

Figure 7 shows a cross-sectional view of a detail;

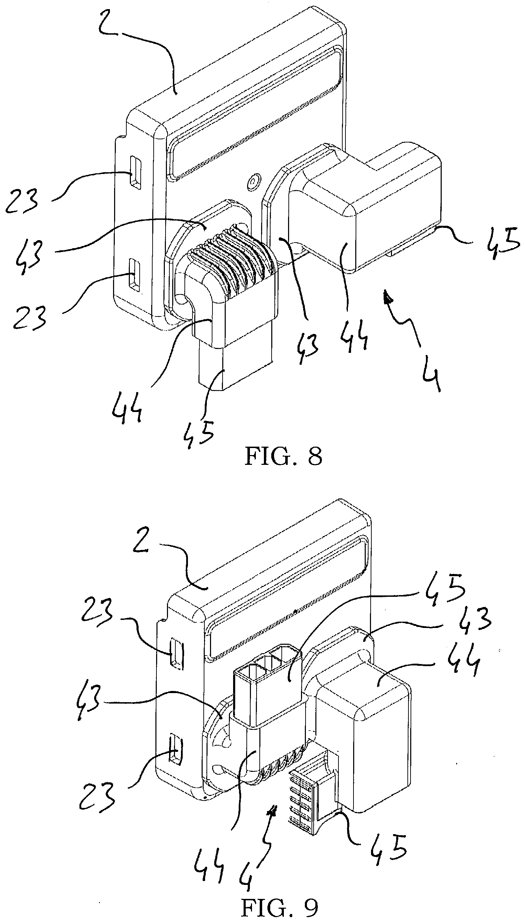

Figures 8 and 9 show two different alternative assembly arrangements of the connectors.

### Detailed description

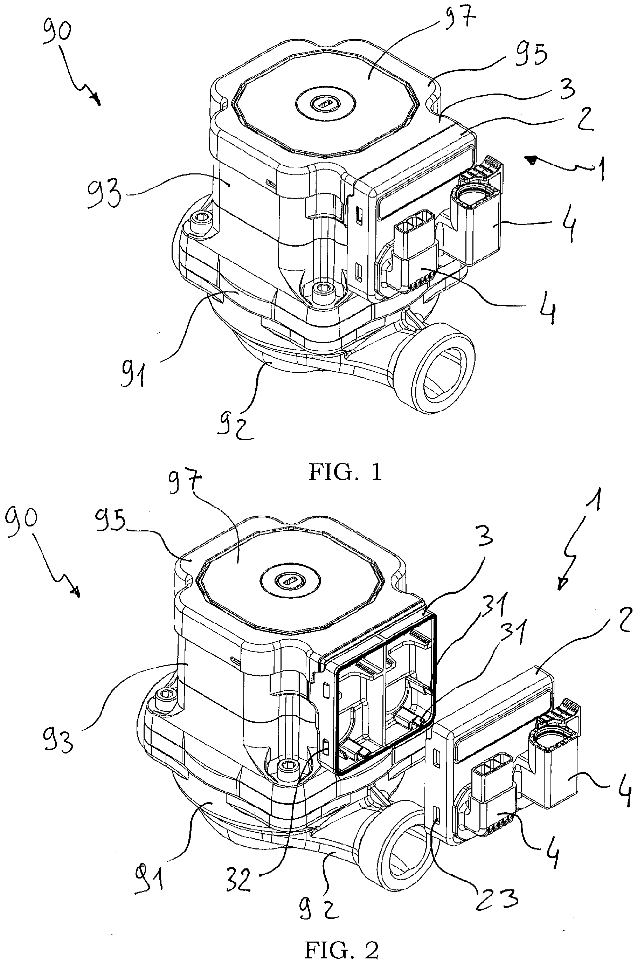

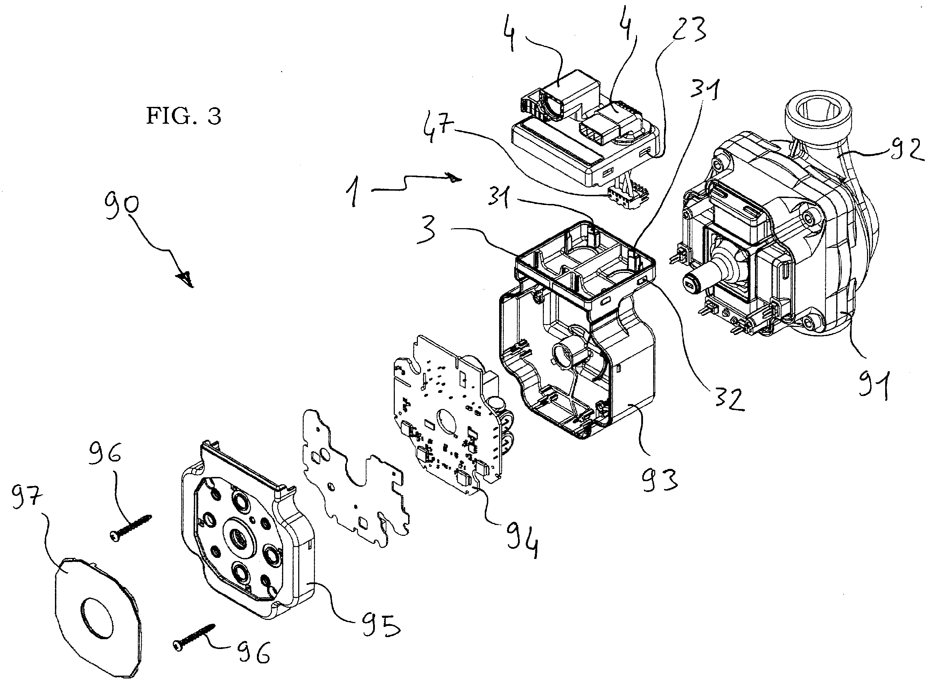

With reference to the attached Figures 1-3, 90 denotes a circulator according to the present invention.

In general terms, the circulator 90 comprises a pump/motor housing 91 which has, fixed at one end, a volute 92 and inside which an impeller driven by an electric motor is rotatably mounted.

The circulator 90 is operated by a synchronous permanent-magnet electric motor with central rotor and cross-shaped stator. However, this particular structure of the circulator is independent of the solution proposed by the present invention which could also be applied to circulators operated by asynchronous motors.

The other end of the pump/motor housing 91 has, fixed thereto, an electronic board housing 93 which contains an electronic board 94 for controlling the pump motor. This housing 93 is closed by a special lid 95 which may be mounted by means of snap-engagement or, as in the example, closed by means of screws 96 covered by a further covering plate 97.

The circulator 90 further comprises an electrical connection assembly in accordance with the present invention.

The connection assembly comprises a connector housing formed by a connector lid 2 removably associated with a connector support 3.

The lid 2 comprises at least one pair of connection holes 21 which engagingly receive, by means of a bayonet coupling, a respective substantially elbow-shaped external connector 4 having a section extending substantially parallel to the lid 2 and a section at 90° mounted rotatably on the lid 2, inside the hole 21.

Each external connector 4 is provided with suitable means for coupling with the hole 21, designed to cooperate with corresponding coupling means formed on the edges of the holes 21 on the lid so that the external connector 4 may snap-rotate assuming a given plurality of positions depending on the desired orientation.

The external connector 4 is inserted in the direction of the axis of the hole 21 and the rotation is performed relative to said axis of the hole 21.

In accordance with the present invention, the support 3 is provided with locking means for cooperating with the coupling means of the external connector 4 and also with the coupling means 2 on the support 3, so as to lock the external connector 4 in a predetermined fixed position, when the lid 2 is associated with the support 3. After the external connector 4 has been engaged by means of a bayonet coupling inside the corresponding hole 21, with the outer connection end of the elbow-shaped external connector 4 oriented in the desired manner, it is possible to fix this position once the lid 2 is mounted on the support 3.

In the example shown, the means for coupling with the connector provided on the perimetral edge of each hole 21 of the lid 2 comprise at least two pairs of recesses 22 for each hole 21. These recesses 22 are spaced from each other at 90° along the circumference of the hole 21. In other words four radial notches are formed along the edge of each hole 21.

In accordance with that shown, the means for coupling of the bayonet end of the external connector 4 comprise a number of arms 41 equal to the number of recesses, in the example shown equal to four, and a stop wall 42 adjacent to each arm 41.

The arms 41 and the stop walls 42 are shaped and arranged so as to be able to be inserted inside the hole 21, passing snugly through the recesses 22.

Basically, the external connector 4 is inserted into the hole 21, arranging the arms 41 with the associated stop walls 42 so as to pass through the recesses 22 of the hole 21.

Once the arms 41 with stop walls 42 have been inserted, the external connector 4 is rotated (in the opposite direction to that where the stop walls 4 are located) so as to bring each stop wall 42 into abutment against each recess 22.

The stop walls 42 are arranged alongside each arm 41 on the same side.

In dimensional terms, the arms 41 and the stop walls 42 of an external connector 4 may pass through the hole by only passing through the recesses 22 which in fact form a widening of the holes 21 at the points where they are present, so as to form a typical bayonet coupling.

The stop walls 42 located alongside each arm 41 are instead designed with dimensions so as to come into abutment against the edge of each recess 22.

The means for locking the support 3 comprise locking teeth 31 extending perpendicularly from the internal base of the support and extending so as to engage inside the recesses 22 of the holes 21 when the external connector 4 is rotated with the side walls 42 into abutment against the edge of the recesses 22 and when the lid 2 is mounted on the said support 3.

In particular, the teeth 31 are shaped so as to occupy entirely the recessed portion 22 not occupied by the stop walls 42 and come into abutment against the said stop walls 42 so as to prevent also rotation of the external connector 4 and therefore a potential detachment of the lid 2.

Locking in the desired predefined position may also be achieved by means of a single tooth 31 for each hole 21.

In the example shown, the external connector 4 comprises a flange 43 which is placed in abutment against the lid 2 when the arms 41 / stop walls 42 are inserted inside the respective recesses 22, said arms and stop walls being formed on said flange 43, on the side which will be arranged on the inside of the connector housing; moreover it comprises a curved connector holder body 44 having at an outer end an electrical connection plug 45 and an inner end from which the cables 46 for an internal connector 47 extend.

The inner end from which the cables extend is formed by the arms 41.

The internal connector 47 is suitably housed inside a retaining seat 24 which receives by means of flexible snap-engaging lugs 25, the internal connector 47 according to a predefined orientation.

Joining together of the lid 2 and the support 3 is ensured by means of a snap-engaging system comprising engaging teeth 32 formed perimetrally on the support 3 and configured to cooperate by means of engagement with engaging slots 23 formed in opposite side edges of the lid 2.

Although in the example described and illustrated reference has been made to an electrical connection assembly with one pair of connectors it is however possible to envisage also a different number of connectors according to embodiments which are different, but in any case fall within the scope of protection of the present invention.

In this case it will be sufficient to provide a suitable number of holes 21 with respective means for coupling with each connector.

Obviously the person skilled in the art may make numerous modifications and variations to the electrical connection assembly described above, all of which moreover are contained in the scope of protection of the invention, as defined by the following claims.

## Claims

1. Electrical connection assembly for a circulator pump driven by an electric motor, comprising a connector housing (1) formed by a connector lid (2) removably associated with a connector support (3), said connector housing (1) being coupled to the circulator (90), whereby said lid (2) comprises at least one connection hole (21) inside which an external connector (4) is engaged by means of a bayonet coupling and is capable of snap-rotating assuming a predetermined number of fixed positions depending on a desired orientation; **characterized by** coupling means (41, 42) for engagement with the hole (21) being provided in the external connector (4) in order to cooperate with locking means (31) arranged within the support (3) so as to lock the external connector (4) in one of said fixed positions, when the lid (2) is associated with the support (3).

2. Electrical connection assembly according to claim 1, wherein the coupling means of the hole (21) in the lid (2) comprise at least one pair of recesses (22) spaced apart along the circumference of the hole (21).

3. Electrical connection assembly according to claim 2, wherein the coupling means of the hole (21) comprise four of said recesses (22) spaced 90° from each other.

4. Electrical connection assembly according to claim 2 or 3, wherein the coupling means of the external connector (4) comprise arms (41) equal in number to the number of said recesses (22) and a stop wall (42) adjacent to each arm (41), said arms and stop walls being shaped and arranged so as to snugly pass through said recesses (22) and then be rotated with the external connector (4) until each stop wall (42) is brought into abutment against each recess (22).

5. Electrical connection assembly according to claim 4, wherein said support locking means comprise locking teeth (31) extending perpendicularly from the internal base of the support (3) and projecting so as to engage inside the recesses (22) of the holes (21) when the external connector (4) is rotated with the stop walls (42) in abutment against an edge of the recesses (22) and with the lid (2) mounted on said support (3).

6. Electrical connection assembly according to claim 5, wherein said teeth (31) are shaped so as to completely fill the portion of the recess (22) not filled by the stop wall (42) and abut against the stop wall (42), so as to prevent the external connector (4) from rotating and being disengaged from the lid (2).

7. Electrical connection assembly according to claim 4, wherein the external connector (4) is elbow-shaped and further comprises a flange (43) that is placed in abutment against the lid (2) when the arms (41) and the stop walls (42) are inserted into the respective recesses (22), said arms (41) and stop walls (42) being formed on said flange (43), on the side that will be placed within the connector housing.

8. Electrical connection assembly according to any one of the preceding claims, wherein the external connector (4) comprises a curved connector-holder body (44) having at an outer end an electrical connection plug (45) and an inner end from which cables (46) for an internal connector (47) extend.

9. Electrical connection assembly according to any one of the preceding claims, wherein said lid (2) comprises two connection holes (21) for receiving corresponding external connectors (4) which are independently adjustable.

10. Electrical connection assembly according to any one of the preceding claims, wherein the lid (2) is associated with the support (3) by means of a snap-engagement system comprising engaging teeth (32) formed perimetrally on the support (3) so as to cooperate by means of engagement with engaging slots (23) formed on side edges of the lid (2).

11. Electrical connection assembly according to any one of the preceding claims, wherein the lid (2) comprises at least one seat (24) comprising retaining means (25) adapted to receive in a default orientation an internal connector (47) electrically connected to the external connector (4).

12. Circulator pump for the circulation of a carrier fluid for boilers and/or heating/cooling plants comprising an electrical connection assembly according to any one of the preceding claims.

## Patentansprüche

1. Elektrische Verbindungsanordnung für eine Zirkulationspumpe, die von einem Elektromotor angetrieben wird, umfassend ein Verbindergehäuse (1), das von einem Verbinderdeckel (2) gebildet ist, der abnehmbar mit einem Verbinderträger (3) in Verbindung steht, wobei das Verbindergehäuse (1) mit dem Zirkulator (90) gekoppelt ist, wobei der Deckel (2) mindestens ein Verbindungsloch (21) umfasst, in dem ein externer Verbinder (4) mittels einer Bajonettkopplung in Eingriff steht und zum Einrast-Drehen imstande ist, wobei er eine vorbestimmte Anzahl von festen Positionen in Abhängigkeit von einer gewünschten Ausrichtung einnimmt; **gekennzeichnet durch**
Kopplungsmittel (41, 42) zum Eingriff mit dem Loch (21)
die in dem externen Verbinder (4) vorgesehen sind, um mit Verriegelungsmitteln (31) zusammenzuwirken, die innerhalb des Trägers (3) angeordnet sind, um den externen Verbinder (4) in einer der festen Positionen zu verriegeln, wenn der Deckel (2) mit dem Träger (3) in Verbindung steht.

2. Elektrische Verbindungsanordnung nach Anspruch 1, wobei die Kopplungsmittel des Lochs (21) in dem Deckel (2) mindestens ein Paar von Aussparungen (22) umfassen, die entlang des Umfangs des Lochs (21) beabstandet sind.

3. Elektrische Verbindungsanordnung nach Anspruch 2, wobei die Kopplungsmittel des Lochs (21) vier der Aussparungen (22) umfassen, die um 90° voneinander beabstandet sind.

4. Elektrische Verbindungsanordnung nach Anspruch 2 oder 3, wobei die Kopplungsmittel des externen Verbinders (4) Arme (41) in gleicher Anzahl wie die Anzahl der Aussparungen (22) und eine Anschlagwand (42) angrenzend an jeden Arm (41) umfassen, wobei die Arme und Anschlagwände so geformt und angeordnet sind, dass sie passgenau durch die Aussparungen (22) hindurchgehen und dann mit dem externen Verbinder (4) gedreht werden, bis jede Anschlagwand (42) gegen jede Aussparung (22) in Anlage gebracht ist.

5. Elektrische Verbindungsanordnung nach Anspruch 4, wobei die Verriegelungsmittel Verriegelungszähne (31) umfassen, die sich senkrecht von der inneren Basis des Trägers (3) erstrecken und hervorstehen, um innerhalb der Aussparungen (22) der Löcher (21) in Eingriff zu treten, wenn der externe Verbinder (4) gedreht wird, wobei sich die Anschlagwände (42) in Anlage gegen eine Kante der Aussparungen (22) befinden und der Deckel (2) auf dem Träger (3) angebracht ist.

6. Elektrische Verbindungsanordnung nach Anspruch 5, wobei die Zähne (31) so geformt sind, dass sie den Abschnitt der Aussparung (22), der nicht von der Anschlagwand (42) ausgefüllt ist, vollständig ausfüllen und gegen die Anschlagwand (42) anliegen, um zu verhindern, dass sich der externe Verbinder (4) dreht und von dem Deckel (2) gelöst wird.

7. Elektrische Verbindungsanordnung nach Anspruch 4, wobei der externe Verbinder (4) ellenbogenförmig ist und ferner einen Flansch (43) umfasst, der in Anlage gegen den Deckel (2) angeordnet ist, wenn die Arme (41) und die Anschlagwände (42) in die jeweiligen Aussparungen (22) eingeführt sind, wobei die Arme (41) und Anschlagwände (42) auf dem Flansch (43) auf der Seite ausgebildet sind, die innerhalb des Verbindergehäuses angeordnet werden.

8. Elektrische Verbindungsanordnung nach einem der vorhergehenden Ansprüche, wobei der externe Verbinder (4) einen gekrümmten Verbinderhalter-Körper (44) umfasst, der an einem äußeren Ende einen elektrischen Verbindungsstecker (45) und ein inneres Ende, von dem sich Kabel (46) für einen internen Verbinder (47) erstrecken, aufweist.

9. Elektrische Verbindungsanordnung nach einem der vorhergehenden Ansprüche, wobei der Deckel (2) zwei Verbindungslöcher (21) zur Aufnahme entsprechender externer Verbinder (4), die unabhängig einstellbar sind, umfasst.

10. Elektrische Verbindungsanordnung nach einem der vorhergehenden Ansprüche, wobei der Deckel (2) mittels eines Einrast-Eingriffsystems mit dem Träger (3) in Verbindung steht, das Eingriffzähne (32) umfasst, die umlaufend auf dem Träger (3) ausgebildet sind, um mittels Eingriff mit Eingriffschlitzen (23) zusammenzuwirken, die auf Seitenkanten des Deckels (2) ausgebildet sind.

11. Elektrische Verbindungsanordnung nach einem der vorhergehenden Ansprüche, wobei der Deckel (2) mindestens einen Sitz (24) umfasst, der Haltemittel (25) umfasst, die ausgelegt sind, um in einer Standardausrichtung einen internen Verbinder (47) aufzunehmen, der mit dem externen Verbinder (4) elektrisch verbunden ist.

12. Zirkulationspumpe zur Zirkulation eines Trägerfluids für Boiler und/oder Heiz-/Kühlanlagen, umfassend eine elektrische Verbindungsanordnung nach einem der vorhergehenden Ansprüche.

## Revendications

1. Ensemble de connexion électrique pour une pompe de circulation entraînée par un moteur électrique, comprenant un boîtier de connecteur (1) formé par un couvercle de connecteur (2) associé de manière amovible à un support de connecteur (3), ledit boîtier de connecteur (1) étant couplé au circulateur (90), ledit couvercle (2) comprenant au moins un trou de connexion (21) à l'intérieur duquel est engagé un connecteur externe (4) par le biais d'un couplage baïonnette et étant susceptible de tourner encliqueté permettant un nombre prédéterminé de positions fixes en fonction d'une orientation souhaitée ; **caractérisé par** des moyens d'accouplement (41, 42) pour l'engagement avec le trou (21) qui sont prévus dans le connecteur externe (4) afin de coopérer avec des moyens de verrouillage (31) disposés à l'intérieur du support (3) de sorte à verrouiller le connecteur externe (4) dans l'une desdites positions fixes lorsque le couvercle (2) est associé au support (3).

2. Ensemble de connexion électrique selon la revendication 1, dans lequel les moyens d'accouplement du trou (21) dans le couvercle (2) comprennent au moins une paire d'évidements (22) espacés le long de la circonférence du trou (21).

3. Ensemble de connexion électrique selon la revendication 2, dans lequel les moyens d'accouplement du trou (21) comprennent quatre desdits évidements (22) espacés de 90° les uns des autres.

4. Ensemble de connexion électrique selon la revendication 2 ou 3, dans lequel les moyens d'accouplement du connecteur externe (4) comprennent des bras (41) en nombre égal au nombre desdits évidements (22) et une paroi de butée (42) adjacente à chaque bras (41), lesdits bras et lesdites parois de butée étant formés et disposés de manière à passer de façon ajustée à travers lesdits évidements (22) et puis à tourner avec le connecteur externe (4) jusqu'à ce que chaque paroi de butée (42) soit amenée en butée contre chaque évidement (22).

5. Ensemble de connexion électrique selon la revendication 4, dans lequel lesdits moyens de verrouillage de support comprennent des dents de verrouillage (31) s'étendant perpendiculairement depuis la base interne du support (3) et saillant de manière à s'engager à l'intérieur des évidements (22) des trous (21) lorsque le connecteur externe (4) est tourné avec les parois de butée (42) en butée contre un bord des évidements (22) et que le couvercle (2) est monté sur ledit support (3).

6. Ensemble de connexion électrique selon la revendication 5, dans lequel lesdites dents (31) sont formées de manière à remplir complètement la portion de l'évidement (22) non remplie par la paroi de butée (42) et sont en butée contre la paroi de butée (42), de manière à empêcher le connecteur externe (4) de tourner et de se désengager du couvercle (2).

7. Ensemble de connexion électrique selon la revendication 4, dans lequel le connecteur externe (4) est de forme coudée et comprend en outre une bride (43) qui est placée en butée contre le couvercle (2) lorsque les bras (41) et les parois de butée (42) sont insérés à l'intérieur des évidements (22) respectifs, lesdits bras (41) et lesdites parois de butée (42) étant formés sur ladite bride (43), du côté qui sera placé à l'intérieur du boîtier du connecteur.

8. Ensemble de connexion électrique selon l'une quelconque des revendications précédentes, dans lequel le connecteur externe (4) comprend un corps porte-connecteur incurvé (44) ayant à une extrémité extérieure une fiche de connexion électrique (45) et une extrémité intérieure d'où s'étendent des câbles (46) pour un connecteur interne (47).

9. Ensemble de connexion électrique selon l'une quelconque des revendications précédentes, dans lequel ledit couvercle (2) comprend deux trous de connexion (21) pour recevoir des connecteurs externes (4) correspondants qui peuvent être réglés indépendamment.

10. Ensemble de connexion électrique selon l'une quelconque des revendications précédentes, dans lequel le couvercle (2) est associé au support (3) au moyen d'un système par encliquetage comprenant des dents d'engagement (32) formées sur le périmètre du support (3) de sorte à coopérer au moyen d'un engagement avec des fentes d'engagement (23) formées sur les bords latéraux du couvercle (2).

11. Ensemble de connexion électrique selon l'une quelconque des revendications précédentes, dans lequel le couvercle (2) comprend au moins un logement (24) comprenant des moyens de retenue (25) conçus pour recevoir dans une orientation par défaut un connecteur interne (47) connecté électriquement au connecteur externe (4).

12. Pompe de circulation pour la circulation d'un fluide caloporteur pour chauffe-eau et/ou installations de chauffage/refroidissement, comprenant un ensemble de connexion électrique selon l'une quelconque des revendications précédentes.
